# FASCICULE DE BREVET EUROPEEN

(11) **EP 4 571 524 B1**
(45) Date de publication et mention de la délivrance du brevet: **01.04.2026**
(21) Numéro de dépôt: 24217666.7
(22) Date de dépôt: 05.12.2024
(51) Int. Cl.: G06F 13/40, G06F 13/42, G06F 12/0815

(54) **CONCENTRATEUR DE COMMUNICATION**
KOMMUNIKATIONSKONZENTRATOR
COMMUNICATION HUB

(30) Priorité: 15.12.2023 FR 2314283
(43) Date de publication de la demande: 18.06.2025
(73) Titulaire: Commissariat à l'Energie Atomique et aux Energies Alternatives, 75015 Paris (FR)
(72) Inventeur: DUTOIT, Denis, 38054 GRENOBLE CEDEX 09 (FR); PHILIPPE, Anthony, 38054 GRENOBLE CEDEX 09 (FR)
(74) Mandataire: Cabinet Beaumont

(56) Documents cités:
- US-A1- 2021 209 035
- US-A1- 2023 027 178

## Description

### Domaine technique

La présente description concerne de façon générale les circuits électroniques.

### Technique antérieure

Dans le domaine de l'automobile, un même constructeur possède généralement une large gamme de véhicules.

En outre, l'architecture électronique/électrique des véhicules s'oriente vers une centralisation, dans chaque véhicule, des calculs et des traitements de données sur une seule plateforme, système ou calculateur, capable d'adresser les besoins applicatifs multimédia et de conduite assistée ou autonome du véhicule.

Toutefois, dans une gamme de véhicules, chaque véhicule a des besoins de calcul et de traitement de données différents dépendant d'une part des dispositifs multimédia qu'il comprend, c'est à dire de l'expérience multimédia proposée par ce véhicule, et, d'autre part, du niveau de son système avancé d'assistance au pilote (ADAS, de l'anglais "Advanced Driver Assistance System"), c'est à dire, par exemple, le niveau L2, L2+, L3 ou L4 du système d'assistance à la conduite dont bénéficie le véhicule.

Pour répondre au besoin de calcul et traitement de données de toute une gamme de véhicules, une première solution consiste embarquer, dans chaque véhicule, un même processeur de très haute performance et de programmer par logiciel ce processeur en fonction des besoins spécifiques du véhicule. Toutefois, un tel processeur devant permettre d'adresser les besoins de calcul et de traitement de données du véhicule le plus haut de gamme, il sera surdimensionné lorsqu'il sera embarqué dans un véhicule plus bas de gamme, ce qui n'est pas souhaitable.

Une deuxième solution consiste à développer, sous la forme d'un système sur puce, un calculateur spécifique, dédié et différent pour chaque ensemble de véhicules ayant des besoins de calcul et de traitement similaires. Toutefois, le développement de plusieurs systèmes sur puce différents est complexe et n'est pas souhaitable, et, en outre, manque d'évolutivité. Cette complexité engendre des coûts et des difficultés techniques importantes de développement.
US 2023/027178 A1 divulgue un circuit commutateur cohérent de cache comprenant un port d'extension pour échanger des données avec un autre circuit commutateur. Le circuit commutateur comprend aussi deux interfaces CXL avec deux processeurs respectifs avec lesquels elles échangent des données. Le circuit commutateur comprend aussi une interface CXL avec une micropuce accélératrice et une interface CXL avec une mémoire.

### Résumé de l'invention

Il existe un besoin de pallier tout ou partie des inconvénients des calculateurs connus adressant des besoins en calcul et traitement de données différents entre les produits d'une même gamme de produits, par exemple entre les véhicules d'une même gamme de véhicules.

Un mode de réalisation pallie tout ou partie des inconvénients des calculateurs connus adressant des besoins en calcul et traitement de données différents entre les produits d'une même gamme de produit, par exemple entre les véhicules d'une même gamme de véhicule.

Un mode de réalisation prévoit un circuit concentrateur de communication comprenant :
au moins deux premiers ports physiques configurés chacun pour échanger des données avec un autre circuit concentrateur de communication faisant partie d'une même zone mémoire à cohérence de cache que ledit circuit concentrateur, lorsque ledit premier port est connecté via un lien haute vitesse à cet autre circuit concentrateur de communication ;
au moins un deuxième port physique configuré pour échanger des données avec une micropuce de calcul faisant partie de ladite même zone mémoire à cohérence de cache lorsque ledit au moins un deuxième port physique est connecté via un lien haute vitesse à cette micropuce de calcul ;
au moins un troisième port physique configuré pour échanger des données avec une micropuce accélératrice faisant partie d'une zone mémoire à cohérence d'entrée/sortie avec ladite même zone mémoire à cohérence de cache, lorsque ledit au moins un troisième port physique est connecté via un lien haute vitesse à cette micropuce accélératrice ;
au moins une première interface configurée pour échanger des données avec un circuit mémoire faisant partie de ladite même zone mémoire à cohérence de cache lorsque ladite au moins une première interface est connectée à ce circuit mémoire ;
au moins une deuxième interface configurée pour échanger des données avec un capteur ;
au moins un circuit de traitement configuré pour mettre en œuvre des traitements de données ;
au moins un réseau sur puce configuré pour transférer des données entre des éléments du circuit concentrateur de communication, lesdits éléments comprenant lesdits au moins deux premiers ports, ledit au moins un deuxième port, ledit au moins un troisième port, ledit au moins un circuit de traitement et ladite au moins une première interface.

Selon un mode de réalisation :
lesdits au moins deux premiers ports physiques sont configurés chacun pour mettre en œuvre un protocole CXL.mem et CXL.cache ou AXI stream lors d'un échange des données avec l'autre circuit concentrateur de communication ;
ledit au moins un deuxième port physique est configuré pour mettre en œuvre un protocole CXL.cache et CXL.mem lors d'un échange de données avec la micropuce de calcul ; et
ledit au moins un troisième port physique est configuré pour mettre en œuvre un protocole CXL.mem, CXL.io ou PCIe lors d'un échange des données avec la micropuce accélératrice.

Selon un mode de réalisation, le circuit concentrateur est configuré pour fusionner plusieurs flux de données qu'il reçoit sans mettre en œuvre de traitement sur lesdits plusieurs flux.

Selon un mode de réalisation, le circuit concentrateur est configuré pour mettre en œuvre des traitements sur des flux de données séparés qu'il reçoit puis pour fusionner des résultats de ces traitements.

Selon un mode de réalisation, le circuit concentrateur est configuré pour mettre en œuvre une cohérence de cache dans ladite même zone mémoire à cohérence de cache.

Selon un mode de réalisation, le circuit concentrateur est configuré pour mettre en œuvre une cohérence d'entrée/sortie entre ladite même zone mémoire à cohérence de cache et une autre zone mémoire à laquelle appartient une micropuce accélératrice.

Selon un mode de réalisation, ladite au moins une première interface comprend une interface pour une mémoire de type DDR et/ou une interface pour une mémoire de type FLASH.

Selon un mode de réalisation, le circuit concentrateur comprend en outre un circuit d'accès direct en mémoire.

Selon un mode de réalisation, ladite au moins une deuxième interface comprend au moins une interface de type CSI et/ou au moins une interface de type Ethernet.

Selon un mode de réalisation, le circuit concentrateur comprend en outre au moins une troisième interface configurée pour échanger des données avec un écran.

Un autre mode de réalisation prévoit un système comprenant :
exactement un circuit concentrateur tel que décrit ci-dessus ; et
une mémoire connectée à ladite au moins une première interface, aucune micropuce de calcul et micropuce accélératrice n'étant connectée au circuit concentrateur.

Un autre mode de réalisation prévoit un système comprenant :
exactement un circuit concentrateur tel que décrit ci-dessus ; et
une micropuce de calcul connectée audit au moins un deuxième port du circuit concentrateur par un lien haute vitesse, aucune autre micropuce de calcul et aucune micropuce accélératrice n'étant connectée au circuit concentrateur.

Un autre mode de réalisation prévoit un système comprenant :
exactement un premier circuit concentrateur tel que décrit ci-dessus et un deuxième circuit concentrateur tel que décrit ci-dessus, un des premiers ports du premier circuit concentrateur étant connecté à l'un des premiers ports du deuxième circuit concentrateur par un premier lien haute vitesse ;
une première micropuce de calcul connectée audit au moins un deuxième port du premier circuit concentrateur par un deuxième lien haute vitesse, aucune autre micropuce de calcul et aucune micropuce accélératrice n'étant connectée au premier circuit concentrateur ; et
une deuxième micropuce de calcul connectée audit au moins un deuxième port du deuxième circuit concentrateur par un troisième lien haute vitesse, aucune autre micropuce de calcul et aucune micropuce accélératrice n'étant connectée au deuxième circuit concentrateur.

Un autre mode de réalisation prévoit un système comprenant :
exactement un premier circuit concentrateur tel que décrit ci-dessus et un deuxième circuit concentrateur tel que décrit ci-dessus, un des premiers ports du premier circuit concentrateur étant connecté à l'un des premiers ports du deuxième circuit concentrateur par un premier lien haute vitesse ;
une première micropuce de calcul connectée audit au moins un deuxième port du premier circuit concentrateur par un deuxième lien haute vitesse, aucune autre micropuce de calcul et aucune micropuce accélératrice n'étant connectée au premier circuit concentrateur ; et
une première micropuce accélératrice connectée audit au moins un troisième port du deuxième circuit concentrateur par un troisième lien haute vitesse, aucune autre micropuce accélératrice et aucune micropuce de calcul n'étant connectée au deuxième circuit concentrateur.

Un autre mode de réalisation prévoit un système comprenant :
exactement un premier circuit concentrateur tel que décrit ci-dessus, un deuxième circuit concentrateur tel que décrit ci-dessus, un troisième circuit concentrateur tel que décrit ci-dessus, un quatrième circuit concentrateur tel que décrit ci-dessus, un des premiers ports du premier circuit étant connecté à l'un des premiers ports du deuxième circuit par un premier lien haute vitesse, un autre des premiers ports du deuxième circuit étant connecté à l'un des premiers ports du troisième circuit par un deuxième lien haute vitesse, un autre des premiers ports du troisième circuit étant connecté à l'un des premiers ports du quatrième circuit par un troisième lien haute vitesse, un autre des premiers ports du quatrième circuit étant connecté à un autre des premiers ports du premier circuit par un quatrième lien haute vitesse ;
une première micropuce de calcul connectée audit au moins un deuxième port du premier circuit concentrateur par un cinquième lien haute vitesse, aucune autre micropuce de calcul et aucune micropuce accélératrice n'étant connectée au premier circuit concentrateur ;
une deuxième micropuce de calcul connectée audit au moins un deuxième port du deuxième circuit concentrateur par un sixième lien haute vitesse, aucune autre micropuce de calcul et aucune micropuce accélératrice n'étant connectée au deuxième circuit concentrateur ;
une première micropuce accélératrice connectée audit au moins un troisième port du troisième circuit concentrateur par un septième lien haute vitesse, aucune autre micropuce accélératrice et aucune micropuce de calcul n'étant connectée au troisième circuit concentrateur ;
une deuxième micropuce accélératrice connectée audit au moins un troisième port du quatrième circuit concentrateur par un huitième lien haute vitesse, aucune autre micropuce accélératrice et aucune micropuce de calcul n'étant connectée au quatrième circuit concentrateur.

Selon un mode de réalisation, chaque micropuce accélératrice est configurée pour mettre en œuvre des traitements de données pour des systèmes avancés d'assistance au pilote de niveau L2+, L3 ou L4.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et sous la forme de blocs, un exemple de mode de réalisation d'un système de calcul et de traitement de données ;
la figure 2 représente, de manière plus détaillée, un exemple de mode de réalisation d'un composant de base du système de la figure 1 ;
la figure 3 représente, de manière plus détaillée, un exemple de mode de réalisation d'un autre composant du système de la figure 1 ;
la figure 4 représente, de manière plus détaillée, un exemple de mode de réalisation d'encore un autre composant du système de la figure 1 ;
la figure 5 représente, de manière schématique et sous la forme de blocs, un exemple de mode de réalisation d'un premier système de calcul et de traitement de données ;
la figure 6 représente, de manière schématique et sous la forme de blocs, un exemple de mode de réalisation d'un deuxième système de calcul et de traitement de données ;
la figure 7 représente, de manière schématique et sous la forme de blocs, un exemple de mode de réalisation d'un troisième système de calcul et de traitement de données ;
la figure 8 représente, de manière schématique et sous la forme de blocs, un exemple de mode de réalisation d'un quatrième système de calcul et de traitement de données ;
la figure 9 représente, de manière schématique et sous la forme de blocs, un exemple de mode de réalisation d'un cinquième système de calcul et de traitement de données ; et
la figure 10 représente une adéquation entre les premier, deuxième, troisième, quatrième et cinquième systèmes et des besoins de calculs et de traitement de données d'une gamme de véhicules automobiles.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Pour adresser les besoins en calcul et traitement de données différents entre les véhicules d'une même gamme de véhicules, il est ici proposé une solution basée sur la désagrégation matérielle d'une gamme de systèmes de calcul et de traitement de données. La désagrégation matérielle consiste à découper l'architecture matérielle d'un circuit en plusieurs éléments fonctionnels distincts fabriqués séparément sous la forme de circuits intégrés appelés micropuces ("chiplet" en anglais), puis de ré-agencer et rassembler ces micropuces dans un même boitier pour former un composant. Le brevet US 11756150 présente le principe de la désagrégation matérielle en micropuces.

Toutefois, dans le brevet mentionné ci-dessus, la désagrégation est basée sur les fonctionnalités de calcul, et ne permet donc pas d'adresser les besoins des produits, par exemple des véhicules automobiles, liés à la gestion des nombreux flux de données, par exemple provenant de nombreux capteurs, qui servent de données d'entrée aux algorithmes de calcul exécutés par les micropuces.

Le brevet US 11100028 présente un composant programmable pour l'aiguillage de données et la transposition de protocole de flux de données entre des micropuces. Toutefois, cette solution nécessite que le composant programmable soit associé à moins une micropuce, ce qui peut ne pas être souhaitable pour adresser les besoins en calcul et en traitement de données des produits les plus bas de gamme d'une gamme de produits, par exemple des véhicules les plus bas de gamme d'une gamme de véhicules. En outre, même lorsque ce composant est associé à une ou plusieurs micropuces, la limitation de ce composant à l'aiguillage de données et la transposition de protocole de flux de données peut ne pas suffire à adresser des besoins spécifiques des produits d'une gamme de produits, par exemple des véhicules d'une gamme de véhicules.

Il est ici proposé, pour la conception de calculateurs basés sur la désagrégation en micropuces, un composant, appelé par la suite concentrateur de communication, permettant de pallier les inconvénients décrits ci-dessus.

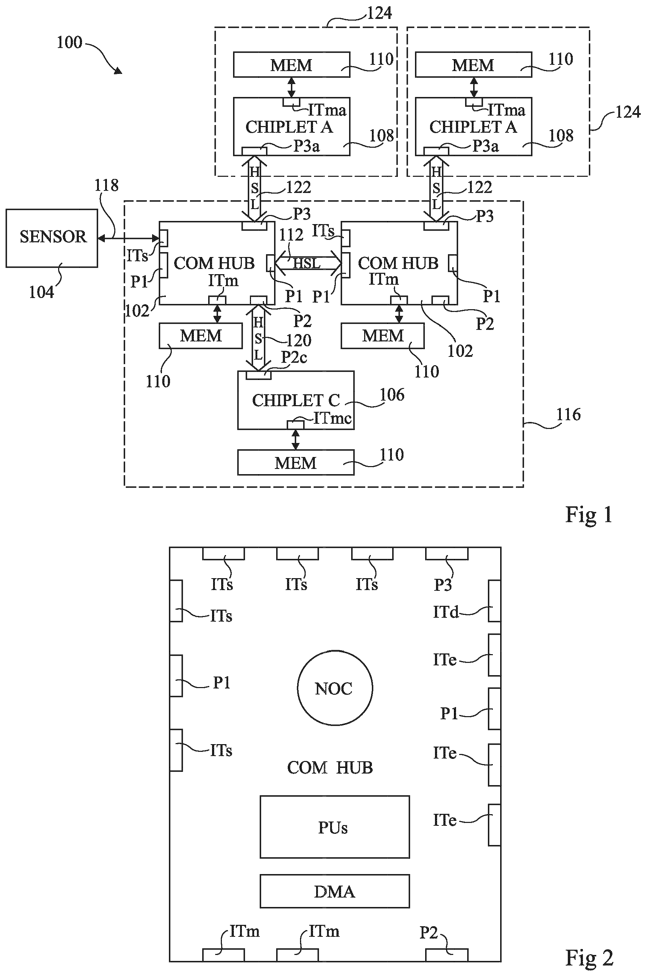

La figure 1 représente, de manière schématique et sous la forme de blocs, un exemple de mode de réalisation d'un système 100 de calcul et de traitement de données basé sur la désagrégation en micropuces et en au moins un concentrateur de données.

Le système 100 comprend au moins un concentrateur de communication 102 (bloc "COM HUB" en figure 1). Dans cet exemple, le système 100 comprend deux concentrateurs 102.

Chaque concentrateur 102 est configuré pour être connecté, de manière modulaire, à plusieurs autres circuits intégrés du système 100. Chaque concentrateur 102 est en outre configuré pour échanger des flux de données, ou, plus simplement dit, des données, avec autres circuits intégrés, ou éléments, du système 100.

Le ou les concentrateurs 102 du système 100 sont configurés pour aiguiller les flux de données dans le système 100.

Par exemple, chaque concentrateur 102 est configuré pour acquérir des données ou flux de données provenant d'un ou plusieurs capteurs 104 (bloc "SENSOR" en figure 1) du système 100. Dans l'exemple de la figure 1, le système 100 comprend un seul capteur 104, bien qu'en pratique un système 100 puisse en comprendre plus.

Par exemple, chaque concentrateur 102 est configuré pour rediriger des données ou flux de données reçus vers une micropuce du système 100 pour que ces données y soient traitées par la micropuce. Par exemple, un concentrateur recevant des données provenant d'un capteur peut les renvoyer, après une simple encapsulation et sans calcul sur ces données, vers une autre micropuce ou un autre concentrateur du système 100 pour que ces données y soient traitées, c'est à dire pour que des calculs et des traitements soient mis en œuvre sur ces données.

Le système 100 peut comprendre deux types de micropuces, à savoir, des micropuces de calcul 106 (bloc "CHIPLET C" en figure 1), et des micropuces accélératrices 108 (bloc "CHIPLET A" en figure 1). Les micropuces 106 sont des circuits de traitement et de calcul générique. Ainsi, chaque micropuce 106 peut adresser une grande variété de traitements et de calculs, relativement simples par rapport à ceux adressés par les micropuces 108. Par exemple, chaque micropuce 106 est programmable par logiciel. Par exemple, chaque micropuce 106 est un processeur générique. A l'inverse, les micropuces 108 sont des circuits intégrés spécifiquement conçus pour adresser des besoins de traitements et de calculs spécifiques, relativement complexes par rapport à ceux adressés par les micropuces 106. Dit autrement, à l'inverse des micropuces 106 qui mettent en œuvre des fonctions de calculs et de traitements génériques, les micropuces 108 mettent en œuvre des fonctions de calculs et traitements spécifiques permettant d'accélérer la mise en œuvre de certaines fonctionnalités spécifiques du système, les puces 108 étant alors, par exemple, appelées micropuces accélératrices 108.

A titre d'exemple, lorsque le système 100 met en œuvre un calculateur pour un véhicule automobile, les micropuces 108 du système 100 peuvent mettent en œuvre des fonctions accélératrices spécifiques aux besoins de la conduite autonome, par exemple des niveaux ADAS L3 et L4.

Dans l'exemple de la figure 1, le système 100 comprend exactement deux micropuces 108 et exactement une micropuce 106, bien que, dans d'autres exemples, le système 100 puisse :
- comprendre un nombre quelconque non nul de micropuces 106 et aucune micropuce 108,
- comprendre un nombre quelconque non nul de micropuces 108 et aucune micropuce 106,
- comprendre un nombre quelconque non nul de micropuces 108 et un nombre quelconque non nul de micropuces 106, ou
- ne comprendre aucune micropuce 106 et 108.

Toujours à titre d'exemple, chaque concentrateur 102 est en outre configuré pour assurer la collecte de données ou de flux de données en mémoire, par exemple pour une utilisation ultérieure de ces données par le système 100. A titre d'exemple, chaque concentrateur 102 est configuré pour contrôler l'enregistrement de données ou de flux de données, par exemple :
- dans un circuit mémoire ou mémoire 110 (bloc "MEM" en figure 1) associée, c'est à dire connectée, à ce concentrateur 102,
- dans une mémoire 110 associée à un autre concentrateur 102 auquel ce concentrateur 102 est connecté ou couplé,
- dans une mémoire 110 associée, c'est à dire connectée, à une micropuce 106 ou 108, que cette micropuce 106 ou 108 soit associée, c'est à dire connectée, à ce concentrateur 102 ou simplement couplée à ce concentrateur 102 via un autre concentrateur 102.

Par exemple, chaque concentrateur 102 est associé à au moins une mémoire 110. Par exemple, chaque micropuce 106 est associée à au moins une mémoire 110, de préférence à exactement une mémoire 110. Par exemple, chaque micropuce 108 est associé à au moins une mémoire 110, de préférence à exactement une mémoire 110.

A titre d'exemple, chaque mémoire 110 associée (c'est à dire connectée) à une micropuce 108 ou 106 est de type à taux double de donnée (DDR de l'anglais "Dual Data Rate"), bien que chaque mémoire associée à une micropuce 106 ou 108 puisse être également d'un autre type, par exemple une mémoire FLASH.

A titre d'exemple, chaque mémoire 110 associée (c'est à dire connectée) à un circuit 102 est de type à taux double de donnée (DDR de l'anglais "Dual Data Rate") ou FLASH, bien que d'autres types de mémoire puissent être envisagés.

Ainsi, dans le système 100, il y a un partitionnement fonctionnel avec, d'une part, la gestion des communications par le ou les concentrateurs 102 du système 100, et, d'autre part, la gestion des calculs et des traitements par les micropuces 106 et 108.

Ce partitionnement dans lequel les micropuces 106 et 108 ne sont pas en charge de la redistribution des communications, ou données, au sein du système 100 favorise le regroupement des fonctions analogiques dans le ou les concentrateurs de communication 102 du système 100. Par exemple, les couches physiques des interfaces de communications sont regroupées dans le ou les circuits 102 du système 100, de sorte que les micropuces 106 et 108 peuvent être dépourvues de ces couches physiques dans leurs interfaces de communication.

Pour assurer la fonction de redistribution des flux de données au sein du système 100, chaque concentrateur 102 comprend un réseau sur puce (NoC de l'anglais "Network on Chip") configuré pour redistribuer, en interne du circuit 102, les données entre les différents éléments constitutifs du circuit 102, par exemple, en particulier entre les ports d'entrée/sortie et les interfaces du concentrateur.

En plus de la gestion redistribution des communications ou transmissions des données au sein du système 100, entre les différents circuits qui le composent, chaque concentrateur 102 est de préférence configuré pour mettre en œuvre des transpositions de protocoles entre des données qu'il reçoit et des données correspondantes qu'il réémet à destination d'un autre élément du système.

Par ailleurs, en plus de la gestion des redistributions de flux de données dans le système 100, avec ou sans transposition de protocole, de préférence chaque concentrateur 102 est configuré pour effectuer des fusions de flux séparés de données reçus, sans prétraitement des flux de données reçus, puis pour fournir le flux fusionné de données résultant à un autre élément du système 100. Dit autrement, chaque concentrateur 102 est configuré pour mettre en œuvre des fusions précoces ("early fusion" en anglais) de flux séparés de données qu'il reçoit. Chaque concentrateur 102 est, de préférence, en outre configuré pour effectuer des traitements, allant au-delà de la simple transposition de protocole, sur des flux séparés de données qu'il reçoit, puis pour fusionner les résultats de ces prétraitements afin de fournir un flux de données fusionné correspondant. Dit autrement, chaque concentrateur 102 est configuré pour mettre en œuvre des fusions tardives ("late fusion" en anglais) de flux séparés de données qu'il reçoit. Le fait que chaque concentrateur 102 soit configuré pour mettre en œuvre des fusions tardives et des fusions précoces permet la mise en œuvre de fusions multimodales de flux séparés de données, les stratégies de fusions multimodales étant, par exemple, particulièrement avantageuses à mettre en œuvre pour le domaine de l'intelligence artificielle.

A titre d'exemple, pour mettre en œuvre les fusions décrites ci-dessus, chaque circuit 102 comprend au moins un circuit de traitement de données configuré pour mettre en œuvre des calculs et des traitements sur les données allant au-delà de la simple transposition de protocole.

Selon un mode de réalisation, chaque concentrateur 102 est configuré pour mettre en œuvre des traitements ou des calculs sur des données, par exemple des traitements ou calculs relativement simples par rapport à ceux mis en œuvre par les micropuces accélératrices 108. Ainsi, un système 100 ne comprenant qu'un seul concentrateur 102 et étant dépourvu de micropuces 106 et 108 permet d'adresser des besoins en calcul et en traitement relativement faible, par exemple des besoins en calcul et en traitement des véhicules les plus bas de gamme d'une gamme de véhicules. Dit autrement, un système 100 ne comprenant qu'un seul concentrateur 102 et étant dépourvu de micropuces 106 et 108 présente une intensité opérative relativement faible, c'est à dire que le maximum d'opérations par seconde que peut traiter le système est relativement faible par rapport à un système comprenant des micropuces 106, 108 et/ou d'autres concentrateur. A titre d'exemple, le concentrateur 102 a une intensité opérative au moins deux fois plus faible que celle de chaque micropuce 106, 108 qui peut être connectée à ce concentrateur.

Par exemple, pour mettre en œuvre les traitements de données décrits ci-dessus, chaque concentrateur 102 comprend au moins un circuit de traitement choisi parmi le groupe comprenant les unités centrales de traitement (CPU de l'anglais "Central Processing Unit"), les unités graphiques de traitement (GPU de l'anglais "Graphic Processing Unit"), les processeurs de signal numérique (DSP de l'anglais "Digital Signal Processor") et les unités de traitement de réseaux de neurones (NPU de l'anglais "Neural Processing Unit").

Pour pouvoir être connecté à un ou plusieurs circuits mémoires 110, chaque concentrateur 102 comprend au moins une interface mémoire ITm configuré pour échanger des données avec un circuit mémoire 110 lorsqu'une telle mémoire 110 est connectée à cette interface ITm.

A titre d'exemple, chaque interface ITm peut être configuré pour être connectée à une mémoire de type DDR. Dans ce cas, l'interface est dite de type DDR. Par exemple, une interface ITm de type DDR est mise en œuvre par un contrôleur mémoire pour une mémoire de type DDR. A titre d'exemple alternatif, chaque interface ITm peut être configurée pour être connectée à une mémoire de type FLASH. Dans ce cas, l'interface ITm est dite de de type FLASH. Par exemple, une interface ITm de type FLASH est mise en œuvre par une interface de type transmission différentielle basse-tension (LVDS de l'anglais "Low-Voltage Differential Signaling") adaptée à communiquer avec un circuit mémoire 110 de type FLASH. A titre d'exemple, lorsque le concentrateur 102 comprend plusieurs interface ITm, ces interfaces ITm peuvent être de types différents, par exemple une première interface ITm est de type DDR alors qu'une deuxième interface ITm est de type FLASH.

Chaque interface ITm de chaque concentrateur 102 peut être soit connectée à un circuit mémoire 110, soit n'être connectée à rien. Toutefois, il est préférable qu'au moins une interface ITm de chaque concentrateur 102 soit connectée à une mémoire 110.

De manière similaire, pour pouvoir être connectée à un circuit mémoire 110, chaque micropuce 106 comprend une interface mémoire ITmc configurée pour être connectée à cette mémoire 110. De la même façon que les interfaces ITm, chaque interface ITmc peut être d'un type donné, par exemple DDR ou FLASH, par exemple différent de celui d'une autre interface ITmc.

Chaque interface ITmc de chaque micropuce 106 peut être soit connectée à un circuit mémoire 110, soit n'être connectée à rien.

En outre, pour pouvoir être connectée à un circuit mémoire 110, chaque micropuce 108 comprend une interface mémoire ITma configurée pour être connectée à cette mémoire 110. De la même façon que les interfaces ITm et ITmc, chaque interface ITma peut être d'un type donné, par exemple DDR ou FLASH, par exemple différent de celui d'une autre interface ITma.

Chaque interface ITma de chaque micropuce 108 peut être soit connectée à un circuit mémoire 110, soit n'être connectée à rien.

En outre, chaque circuit mémoire 110 est, de préférence, connecté qu'à un seul élément parmi un concentrateur 102, une micropuce 106 et une micropuce 108, la mémoire 110 étant alors dite associée à cet élément.

Bien que cela ne soit pas le cas dans l'exemple de la figure 1, une micropuce 108 peut n'être connectée à aucune mémoire 110, et/ou une micropuce 106 peut n'être connectée à aucune mémoire 110, et/ou un concentrateur peut n'être connecté à aucune mémoire 110. Toutefois, un concentrateur 102 sera de préférence associé à une mémoire 110, par exemple une mémoire comprenant du code exécutable par le concentrateur 102, par exemple de sorte à programmer le concentrateur 102.

Les mémoires 110 du système 100 mettent en œuvre la mémoire partagée ou distribuée du système 100.

Par ailleurs, chaque concentrateur 102 comprend au moins deux ports physiques P1. Chaque port P1 est configuré pour échanger des données avec un autre concentrateur 102 quand le concentrateur 102 comprenant ce port P1 est connecté. Dit autrement, chaque port P1 est configuré pour échanger des données avec un autre concentrateur 102 auquel ce port P1 est connecté. La connexion de deux concentrateur 102 via deux ports P1 respectifs de ces deux concentrateurs 102 est mise en œuvre par un lien haute vitesse (HSL de l'anglais "High Speed Link"). A titre d'exemple, un lien haute vitesse est configuré pour transférer au moins 4 giga octets par seconde, de préférence au moins 8 giga octets par seconde, indépendamment du fait que ce lien HSL puisse être un lien série ou un lien parallèle. En figure 1, les liens hautes vitesses entre deux circuits 102 sont référencés 112, le système 100 de l'exemple de la figure 1 ne comprenant qu'un seul lien 112.

Chaque concentrateur 102, et, plus particulièrement, chaque port P1 de ce concentrateur 102, est configuré, lorsqu'il est connecté au port P1 d'un autre concentrateur 102 par un lien 112, par exemple un autre concentrateur 102 faisant partie d'un même système que ce concentrateur 102, pour que les deux concentrateurs 102 et la ou les mémoires 110 auxquelles ces concentrateurs sont connectés, fasse partie d'une même zone mémoire à cohérence de cache 116 (délimité en traits pointillés en figure 1). Cette zone mémoire à cohérence de cache 116 est attachée, ou associée, à ces deux concentrateurs 102. De préférence, tous les concentrateurs 102 d'un système 100 font partie de la même zone mémoire à cohérence de cache. La zone mémoire à cohérence de cache 116 est, par exemple, une mémoire distribuée entre plusieurs mémoires 110 faisant partie de la zone mémoire 116.

Ainsi, chaque port P1 de chaque concentrateur 102 peut être connecté soit au port P1 d'un autre concentrateur 102 via un lien 112, soit n'être connecté à rien.

Chaque concentrateur 102 comprend en outre au moins une interface, par exemple une interface ITs, configurée pour échanger des données avec un capteur 104 lorsqu'elle est connectée à ce capteur 104. La connexion de l'interface ITs à un capteur s'effectue, par exemple, via un lien 118 qui n'est pas un lien haute vitesse. A titre d'exemple, chaque concentrateur 102 peut comprendre au moins une interface ITs de type interface série pour caméra (CSI de l'anglais "Camera Serial Interface"). Bien entendu, chaque interface ITs de chaque concentrateur 102 peut être d'un autre type que le type CSI.

Chaque concentrateur 102 comprend au moins un port physique P2. Chaque port P2 est configuré pour échanger des données avec une micropuce de calcul 106 quand ce port P2 est connecté à cette micropuce 106. La connexion d'une micropuce 106 au port P2 d'un concentrateur 102 est mise en œuvre par un lien haute vitesse (HSL). En figure 1, les liens hautes vitesses entre deux circuits 102 et 106 sont référencés 120, le système 100 de l'exemple de la figure 1 ne comprenant qu'un seul lien 120. A titre d'exemple, chaque micropuce 106 comprend un port physique P2c similaire au port P2 du concentrateur 102 auquel cette micropuce 106 est connectée par un lien 120 correspondant reliant ces ports P2 et P2c entre eux.

Chaque concentrateur 102, et, plus particulièrement, chaque port P2 de concentrateur 102, est configuré, lorsqu'il est connecté à une micropuce 106 par un lien 120, pour que la micropuce 106 et l'éventuelle mémoire 110 à laquelle la micropuce 106 est connectée fasse partie de la même zone mémoire à cohérence de cache 116 que le concentrateur 102 auquel la micropuce 106 est connectée. A titre d'exemple, cette cohérence de cache au sein de la zone mémoire partagée 116 est mise en œuvre par chacun des concentrateurs 102 auxquels cette zone 116 est attachée.

Chaque port P2 de chaque concentrateur 102 peut être soit connecté à une micropuce de calcul 106 via un lien 120, soit n'être connecté à rien.

Chaque concentrateur 102 comprend au moins un port physique P3. Chaque port P3 est configuré pour échanger des données avec une micropuce accélératrice 108 quand ce port P3 est connecté à cette micropuce 108. La connexion d'une micropuce 108 au port P3 d'un concentrateur 102 est mise en œuvre par un lien haute vitesse (HSL). En figure 1, les liens hautes vitesses entre deux circuits 102 et 108 sont référencés 122, le système 100 de l'exemple de la figure 1 ne comprenant que deux liens 122. A titre d'exemple, chaque micropuce 108 comprend un port physique P3a similaire au port P3 du concentrateur 102 auquel cette micropuce 108 est connectée par un lien 122 correspondant reliant ces ports P3 et P3a entre eux.

Chaque concentrateur 102, et, plus particulièrement, chaque port P3 de concentrateur 102, est configuré, lorsqu'il est connecté à une micropuce 108 par un lien 122, pour que la micropuce 108 et l'éventuelle mémoire 110 à laquelle la micropuce 108 est connectée fasse partie d'une zone mémoire 124 à cohérence d'entrée/sortie par rapport à la zone mémoire à cohérence de cache 116 à laquelle appartient le concentrateur 102 connecté à cette micropuce 108. En figure 1, dans l'exemple de système 100 représenté, deux micropuces 108 sont connectées à deux concentrateurs 102 respectifs, les deux concentrateurs 102 faisant partie de la zone à cohérence de cache 116, et les deux micropuces 108 faisant partie chacune d'une zone mémoire 124 respective (délimitée par des traits en pointillés en figure 1) à cohérence d'entrée/sortie par rapport à la zone mémoire 116.

A titre d'exemple, cette cohérence d'entrée/sortie entre une zone mémoire 124 à laquelle appartient une micropuce 108 et la zone mémoire à cohérence de cache 116 à laquelle appartient le concentrateur 102 connecté à cette micropuce 108 est mise en œuvre par le ou les concentrateurs 102 du système 100.

Chaque port P3 de chaque concentrateur 102 peut être soit connecté à une micropuce accélératrice 108 via un lien 122, soit n'être connecté à rien.

Bien que cela ne soit pas illustré dans l'exemple de système 100 de la figure 1, en plus des ports physiques P1, P2 et P3 et des interfaces ITm et ITs, chaque concentrateur peut comprendre également :
- au moins une interface ITe de type Ethernet, par exemple destinée à être connectée à un modem, c'est à dire un circuit modulateur/démodulateur ou par exemple destinée à être connectée à un capteur de type détection et estimation de la distance par la lumière (LIDAR de l'anglais "LIght and Detection And Ranging"). Une interface ITe peut donc, au même titre les interface ITs, être utilisée pour connecter un capteur 104 à un concentrateur 102 ; et/ou
- au moins une interface ITd destinée à être connectée à un écran, par exemple une interface de type transmission différentielle basse-tension (LVDS de l'anglais "Low-Voltage Differential Signaling").

En outre, bien que cela ne soit pas illustré dans l'exemple de système 100 de la figure 1, en plus des ports physiques, des interfaces, de son ou ses circuits de traitement et de son réseau sur puce, chaque circuit 102 peut comprendre un circuit d'accès direct en mémoire (DMA de l'anglais "Direct Memory Access"). Ce circuit est, par exemple, configuré pour gérer des transferts de données, par exemple principalement les données provenant d'un capteur 104 connecté à une interface ITs ou ITe du concentrateur 102.

De préférence, lorsqu'un système 100 comprend plusieurs concentrateurs 102 connectés en réseau, ces concentrateurs sont identiques les uns ou autres.

A titre d'exemple, les ports P3 et P3a sont configurés chacun pour mettre en œuvre un protocole "CXL.mem", "CXL.io" ou "PCIe" lorsqu'un port P3 est connecté à un port P3c via un lien 122, c'est à dire lors d'un échange de données entre un concentrateur 102 et une micropuce accélératrice 108.

A titre d'exemple, les ports P2 et P2c sont configurés chacun pour mettre en œuvre un protocole "CXL.cache" et "CXL.mem" lorsqu'un port P2 est connecté à un port P2c via un lien 120, c'est à dire lors d'un échange de données entre un concentrateur 102 et une micropuce de calcul 106.

A titre d'exemple, chaque port P1 est configuré pour mettre en œuvre un protocole "CXL.mem" et "CXL.cache" ou "AXI stream" lorsqu'il est connecté, via un lien 112, au port P1 d'un autre concentrateur 102, c'est à dire lors d'un échange de données avec cet autre concentrateur.

La figure 2 représente, de manière plus détaillée, un exemple de mode de réalisation d'un circuit 102 du système de la figure 1.

Le circuit 102 (bloc "COM HUB en figure 2) comprend, comme cela a été indiqué ci-dessus en relation avec la figure 1 :
- au moins deux ports P1, par exemple exactement deux ports P1 dans l'exemple de la figure 2 ;
- au moins un port P2, par exemple exactement un port P2 dans l'exemple de la figure 2 ;
- au moins un port P3, par exemple exactement un port P3 dans l'exemple de la figure 2 ;
- au moins une interface ITs, par exemple exactement cinq interfaces ITs dans l'exemple de la figure 2, par exemple toutes de type CSI ;
- au moins une interface ITm, par exemple exactement deux interfaces ITm dans l'exemple de la figure 2, par exemple une interface ITm de type FLASH et une interface ITm de type DDR ;
- au moins une unité de traitement, représentée sous la forme d'un bloc PUs en figure 2 ; et
- un réseau sur puce NOC.

Dans l'exemple de la figure 2, le circuit 102 comprend en outre un circuit d'accès direct en mémoire (bloc "DMA" en figure 2).

Toujours dans l'exemple de la figure 2, le circuit 102 comprend au moins une interface ITe de type Ethernet, par exemple exactement trois interfaces ITe dans l'exemple de la figure 2.

Toujours dans cet exemple, le circuit 102 comprend au moins une interface ITd, par exemple exactement une interface ITd dans l'exemple de la figure 2, par exemple de type transmission différentielle basse-tension (LVDS de l'anglais "Low-Voltage Differential Signaling").

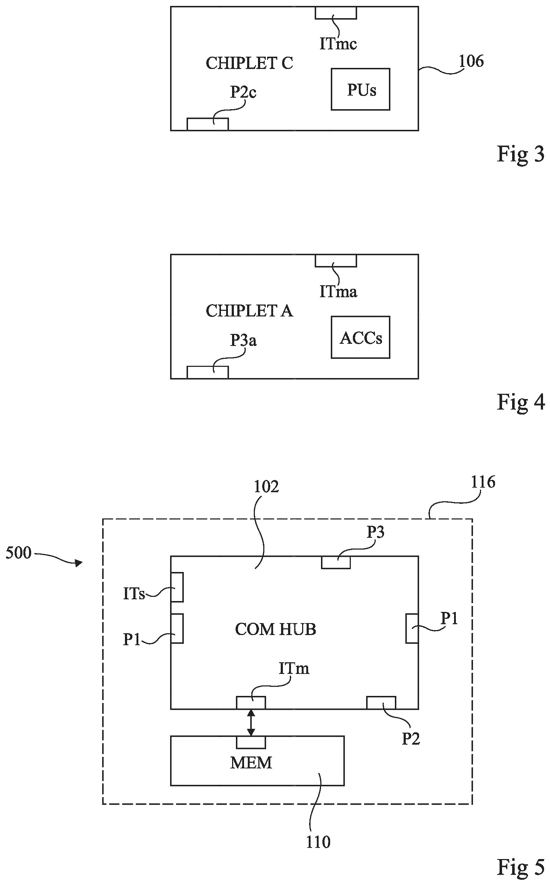

La figure 3 représente, de manière plus détaillée, un exemple de mode de réalisation d'une micropuce de calcul 106 de système 100 de la figure 1.

La micropuce 106 (bloc "CHIPLET C" en figure 3) comprend au moins une interface mémoire ITmc, de préférence une unique interface mémoire ITmc. Par exemple, cette interface ITmc est de type DDR, et est alors configurée pour être connectée à une mémoire 110 de type DDR.

La micropuce 106 comprend en outre un port physique P2c pour la connexion, via un lien 120, au port P2 d'un concentrateur 102.

Enfin, la micropuce 106 comprend une ou plusieurs unités de traitement, représentées par un bloc PUs unique en figure 3. A titre d'exemple, la ou les unités de traitement d'une micropuce 106 sont choisies dans le groupe comprenant les CPUs, les GPUs et les NPUs. A titre d'exemple, la micropuce 106 ayant étant prévue pour mettre en œuvre des fonctionnalités génériques par rapport aux fonctionnalités spécifiques des micropuces 108, la micropuce 106 ne comprend pas de DSP.

De préférence, toutes les micropuces 106 d'un système 100 ont une architecture similaire ou identique à celle de la micropuce 106 décrite en relation avec la figure 3.

La figure 4 représente, de manière plus détaillée, un exemple de mode de réalisation d'une micropuce accélératrice 108 de système 100 de la figure 1.

La micropuce 108 (bloc "CHIPLET A" en figure 4) comprend au moins une interface mémoire ITma, de préférence une unique interface mémoire ITma. Par exemple, cette interface ITma est de type DDR, et est alors configurée pour être connectée à une mémoire 110 de type DDR.

La micropuce 108 comprend en outre un port physique P3a pour la connexion, via un lien 122, au port P3 d'un concentrateur 102.

Enfin, la micropuce 108 comprend une ou plusieurs unités de traitement, représentées par un bloc ACCs unique en figure 4. A titre d'exemple, la ou les unités de traitement d'une micropuce 108 sont choisies dans le groupe comprenant les CPUs, les GPUs, les DSPs et les NPUs. A titre d'exemple, la micropuce 108 ayant étant prévue pour mettre en œuvre des fonctionnalités spécifiques par rapport aux fonctionnalités génériques des micropuces 106, la micropuce 108 comprend un DSP et/ou un GPU.

De préférence, toutes les micropuces 108 d'un système 100 ont une architecture similaire ou identique à celle de la micropuce 108 décrite en relation avec la figure 4.

Selon un mode de réalisation, la ou les unités de traitement PUs d'une micropuce 108 sont configurées pour mettre en œuvre des fonctionnalités de conduite assistée ou autonome.

Différents exemples de mode de réalisation de systèmes construits à partir au moins d'un concentrateur 102, et, lorsque les besoins applicatifs le nécessitent, d'au moins une micropuces 106 et/ou d'au moins une micropuce 108, vont maintenant être décrits.

Bien entendu, ces exemples de systèmes ne sont pas limitatifs, et la personne du métier sera en mesure de prévoir bien d'autres exemples de systèmes ou calculateurs obtenus en assemblant, c'est à dire en réagrégeant, un ou plusieurs concentrateurs 102 avec une ou plusieurs micropuces 106 et/ou 108.

La figure 5 représente, de manière schématique et sous la forme de blocs, un exemple de mode de réalisation d'un système 500 de calcul et de traitement de données.

Par rapport au système 100, le système 500 ne comprend qu'un seul circuit 102, et est dépourvu de micropuce 106 et de micropuce 108.

Dit autrement, le système 500 comprend exactement un circuit 102, et aucune micropuce 106 ou 108 n'est connectée à ce circuit 102.

Un circuit mémoire 110 est connecté à l'interface ITm du circuit 102.

Le circuit 102, et la mémoire 110 qui lui est associée, appartiennent à une zone mémoire à cohérence de cache 116.

Du fait que le circuit 102 comprend au moins une unité de traitement, le système 500 peut adresser des besoins en traitement et calcul alors qu'aucune micropuce 106, 108 n'est connectée au circuit 102.

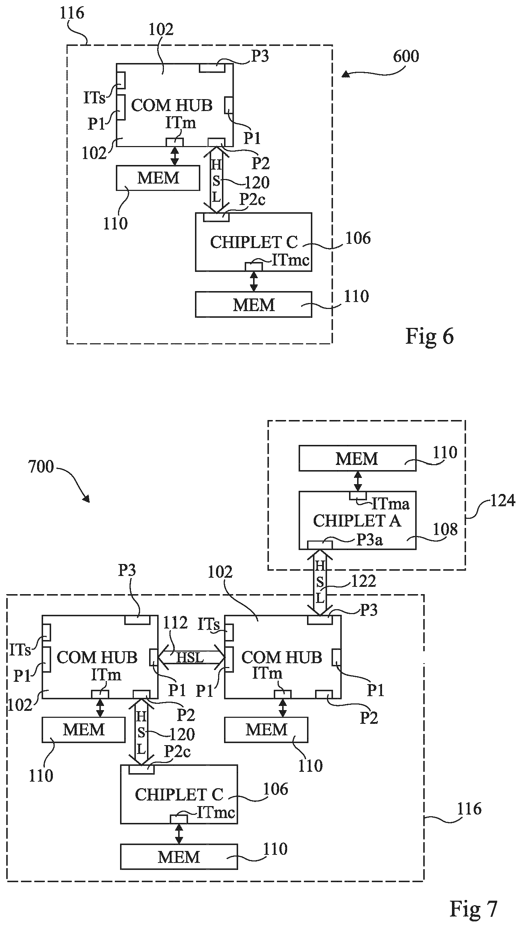

La figure 6 représente, de manière schématique et sous la forme de blocs, un exemple de mode de réalisation d'un système 600 de calcul et de traitement de données.

Le système 600 comprend, comme le système 500, exactement un circuit 102 et un circuit mémoire 110 associé à ce circuit 102.

Toutefois, par rapport au système 500, une micropuce 106 est connectée, via un lien 120, au port P2 du circuit 102. Par exemple, le lien 120 connecte le port P2 du circuit 102 au port P2c de la micropuce 106.

Dans cet exemple, un circuit mémoire 110 est connectée à l'interface ITmc de la micropuce 106, cette mémoire étant associée à la micropuce 106.

Le concentrateur 102 et sa mémoire associée 110 ainsi que la micropuce 106 et sa mémoire associée 110 font partie d'une même zone mémoire 116 à cohérence de cache.

La figure 7 représente, de manière schématique et sous la forme de blocs, un exemple de mode de réalisation d'un système 700 de calcul et de traitement de données.

Par rapport aux systèmes 500 et 600, le système 700 comprend exactement deux circuits concentrateurs 102, exactement une micropuce 106 et exactement une micropuce 108.

Les deux circuits 102 sont connectés l'un à l'autre. Par exemple, un port P1 d'un des circuits 102 est connecté à un port P1 de l'autre circuit 102, via un lien 112.

A titre d'exemple, chaque circuit 102 est associé à un circuit mémoire 110 correspondant. Par exemple, chaque circuit 102 a une interface ITm connecté au circuit mémoire 110 à laquelle ce circuit 102 est associé.

Une micropuce 106 est connectée, via un lien 120, au port P2 d'un premier des deux circuits 102, celui de gauche en figure 7. Par exemple, le lien 120 connecte le port P2 du premier circuit 102 au port P2c de la micropuce 106.

Dans cet exemple, un circuit mémoire 110 est connectée à l'interface ITmc de la micropuce 106, cette mémoire étant associée à la micropuce 106.

En outre, une micropuce 108 est connectée, via un lien 122, au port P3 du deuxième des deux circuits 102, celui de droite en figure 7. Par exemple, le lien 122 connecte le port P3 du deuxième circuit 102 au port P3a de la micropuce 108.

Dans cet exemple, un circuit mémoire 110 est connectée à l'interface ITma de la micropuce 108, cette mémoire étant associée à la micropuce 108.

Les deux concentrateurs 102 et leurs mémoires associées 110 ainsi que la micropuce 106 et sa mémoire associée 110 font partie d'une même zone mémoire 116 à cohérence de cache.

En revanche, la micropuce 108 et sa mémoire 110 associée font partie d'une autre zone mémoire 124, cette autre zone mémoire 124 étant à cohérence d'entrée/sortie par rapport à la zone mémoire 116.

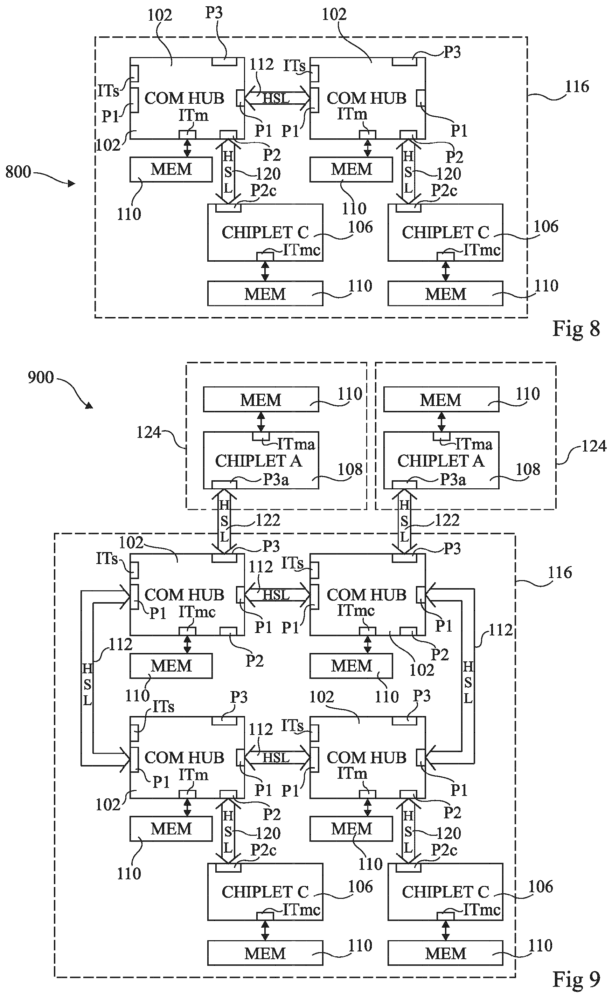

La figure 8 représente, de manière schématique et sous la forme de blocs, un exemple de mode de réalisation d'un système 800 de calcul et de traitement de données.

Comme le système 700, le système 800 comprend exactement deux circuits concentrateurs 102. En revanche, à la différence du système 700, le système 800 comprend exactement deux micropuce 106 et est dépourvu de micropuce 108.

Les deux circuits 102 sont connectés l'un à l'autre. Par exemple, un port P1 d'un des circuits 102 est connecté à un port P1 de l'autre circuit 102, via un lien 112.

A titre d'exemple, chaque circuit 102 est associé à un circuit mémoire 110 correspondant. Par exemple, chaque circuit 102 a une interface ITm connecté au circuit mémoire 110 à laquelle ce circuit 102 est associé.

Une première micropuce 106 est connectée, via un lien 120, au port P2 d'un premier des deux circuits 102. Par exemple, le lien 120 connecte le port P2 du premier circuit 102 au port P2c de la première micropuce 106.

Dans cet exemple, un circuit mémoire 110 est connectée à l'interface ITmc de la première micropuce 106, cette mémoire étant associée à la micropuce 106.

En outre, une deuxième micropuce 106 est connectée, via un lien 120, au port P2 du deuxième des deux circuits 102. Par exemple, le lien 120 connecte le port P2 du deuxième circuit 102 au port P2c de la deuxième micropuce 106.

Dans cet exemple, un circuit mémoire 110 est connectée à l'interface ITmc de la deuxième micropuce 106, cette mémoire étant associée à la micropuce 106.

Les deux concentrateurs 102 et leurs mémoires associées 110 ainsi que les deux micropuces 106 et leurs mémoires associées 110 font partie d'une même zone mémoire 116 à cohérence de cache.

La figure 9 représente, de manière schématique et sous la forme de blocs, un exemple de mode de réalisation d'un système 900 de calcul et de traitement de données.

Le système 900 comprend exactement quatre circuits 102, à savoir un premier concentrateur 102 (en haut à gauche en figure 9), un deuxième concentrateur 102 (en haut à droite en figure 9), un troisième concentrateur 102 (en bas à droite en figure 9) et un quatrième concentrateur 102 (en bas à gauche en figure 9).

Dans cet exemple, chacun des concentrateurs 102 est associé à un circuit mémoire 110 correspondant, le circuit mémoire 110 associé à un concentrateur 102 étant connectée à une interface ITm de ce concentrateur 102.

Les circuits 102 sont couplés les uns aux autres. Par exemple, les circuits 102 forment un réseau à deux dimensions. Par exemple, un port P1 du premier circuit 102 est connecté à un port P1 du deuxième circuit 102 par un premier lien 112, un autre port P1 du deuxième circuit 102 est connecté à un port P1 du troisième circuit 102 par un deuxième lien 112, un autre port P1 du troisième circuit 102 est connecté à un port P1 du quatrième circuit par un troisième lien 112, et un autre port P1 du quatrième circuit est connecté à un autre port P1 du premier circuit 102 par un quatrième lien 112.

Par ailleurs, le système 900 comprend exactement deux micropuces 106. Une première micropuce 106 est connectée, via un lien 120, au port P2 du troisième circuit 102. Par exemple, le lien 120 connecte le port P2 du troisième circuit 102 au port P2c de la première micropuce 106. Dans cet exemple, un circuit mémoire 110 est connectée à l'interface ITmc de la première micropuce 106, cette mémoire étant associée à la micropuce 106. La deuxième micropuce 106 est connectée, via un autre lien 120, au port P2 du quatrième circuit 102. Par exemple, cet autre lien 120 connecte le port P2 du quatrième circuit 102 au port P2c de la deuxième micropuce 106. Dans cet exemple, un circuit mémoire 110 est connectée à l'interface ITmc de la deuxième micropuce 106, cette mémoire étant associée à la micropuce 106.

En outre, le système 900 comprend exactement deux micropuces 108. Une première micropuce 108 est connectée, via un lien 122, au port P3 du premier circuit 102. Par exemple, le lien 122 connecte le port P3 du premier circuit 102 au port P3a de la première micropuce 108. Dans cet exemple, un circuit mémoire 110 est connectée à l'interface ITma de la première micropuce 108, cette mémoire étant associée à la micropuce 108. La deuxième micropuce 108 est connectée, via un autre lien 122, au port P3 du deuxième circuit 102. Par exemple, cet autre lien 122 connecte le port P3 du deuxième circuit 102 au port P3a de la deuxième micropuce 108. Dans cet exemple, un circuit mémoire 110 est connectée à l'interface ITma de la deuxième micropuce 108, cette mémoire étant associée à la micropuce 108.

Les deux concentrateurs 102 et leurs mémoires associées 110 ainsi que les deux micropuces 106 et leurs mémoires associées 110 font partie d'une même zone mémoire 116 à cohérence de cache.

En revanche, les deux micropuces 108 et leurs mémoires 110 associées font partie chacune d'une autre zone mémoire 124, cette autre zone mémoire 124 étant à cohérence d'entrée/sortie par rapport à la zone mémoire 116.

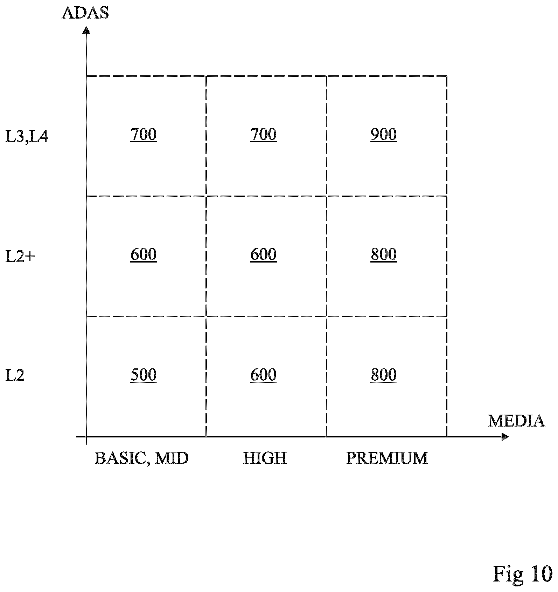

La figure 10 illustre, sous la forme d'un tableau, l'adéquation entre les systèmes des figures 5 à 9 et des besoins de calculs et de traitement de données d'une gamme de véhicules automobiles.

Plus particulièrement, l'axe des abscisses du tableau, référencé MEDIA en figure 10, représente les besoins en calculs et en traitements de données en fonction de l'expérience multimédia proposée par un véhicule, ces besoins étant les plus faibles lorsque le véhicule propose une expérience multimédia faible ("BASIC, MID" en figure 10), plus élevés lorsque le véhicule propose une expérience multimédia moyenne ("HIGH" en figure 10), et les plus élevés lorsque le véhicule propose une expérience multimédia élevée ("PREMIUM" en figure 10).

En outre, l'axe des ordonnées du tableau, référencé ADAS en figure 10, représente le niveau du système d'assistance au pilote, ADAS, seuls les niveaux L2, L2+, L3 et L4 étant représentés en figure 10, les niveaux L3 et L4 étant regroupé en un seul groupe L3, L4.

Pour un véhicule automobile proposant une expérience multimédia BASIC, MID avec un niveau ADAS L2, c'est à dire un véhicule bas de gamme, un seul circuit 102 permet de satisfaire aux besoins de calcul et de traitement de données du véhicule, et un système 500 peut être utilisé comme calculateur pour ce véhicule.

Pour un véhicule automobile ayant le même niveau d'info-divertissement BASIC, MID, mais un niveau ADAS L2+, les besoins en calcul et en traitement de données augmentent en raison de l'augmentation de niveau ADAS, et une micropuce 106 est alors ajoutée pour répondre à cette augmentation. Le système 600 permet donc d'adresser les besoins applicatifs de ce véhicule. La micropuce 106 du système 600 est alors, par exemple, configurée pour traiter les calculs liés au niveau ADAS L2+.

En outre, la micropuce 106 du système 600 est suffisamment générique pour permettre d'adresser les besoins en calcul et en traitement de données d'un véhicule ayant un niveau HIGH d'info-divertissement et un niveau ADAS L2, voire L2+.

En revanche, pour un véhicule ayant un niveau d'info-divertissement BASIC, MID ou HIGH, avec un niveau ADAS L3 ou L4, les besoins en calcul et en traitement spécifiques aux niveaux ADAS L3 et L4 nécessitent l'ajout d'une micropuce 108 et d'un concentrateur 102. Ainsi, le système 700 permet d'adresser les besoins en calcul et en traitement de données des véhicules ayant un niveau ADAS L3 ou L4, et un niveau d'info-divertissement BASIC, MID ou HIGH.

Pour un véhicule ayant un niveau d'info-divertissement PREMIUM, les besoins en calcul et en traitement de données augmentent par rapport niveaux d'info-divertissement HIGH et BASIC, MID, notamment du fait de la gestion des écrans et de l'augmentation du nombre de dispositifs d'info-divertissement. Toutefois, les besoins en calcul et en traitement de données restent relativement génériques tant que le véhicule présente un niveau ADAS L2+ ou L2. Les besoins en calcul et en traitement de données, sont alors adressés par un système 800 à deux concentrateurs 102 pour fournir un nombre suffisant d'interfaces pour les dispositifs d'info-divertissement, chacun associé à une micropuce 106 pour assurer les calculs et les traitements de données lié à ce niveau d'info-divertissement et au niveau ADAS L2 ou L2+.

Enfin, pour un véhicule ayant un niveau ADAS L3 ou L4 avec un niveau PREMIUM d'info-divertissement, l'utilisation de quatre circuits 102 permet de gérer la grande quantité de données à traiter et à redistribuer dans le système, l'utilisation de deux micropuces 106 permet d'adresser les besoins génériques en calcul et en traitement de données liés au niveau PREMIUM d'info-divertissement, et l'utilisation de deux micropuces 108 permet d'adresser les besoins spécifiques en calcul et en traitement de données liés au niveau ADAS L3 ou L4. Le système 900 permet donc d'adresser les besoins d'un véhicule de cette gamme.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'intérêt du circuit 102, et, plus généralement, des systèmes de calcul et de traitement de données ait été présenté en relation avec le domaine de l'automobile, le circuit 102 et des systèmes de calcul et de traitement de données obtenu par construction modulaire à partir d'au moins un circuit 102 peuvent être utilisés, avec les mêmes avantages, dans d'autres domaines comme par exemple le domaine de l'avionique, le domaine des drones, le domaine de la robotique etc... Par ailleurs, bien que l'on ait décrit ci-dessus le cas où lorsque deux concentrateurs 102 faisant partie d'un même système ou calculateur sont connectés l'un à l'autre via leurs ports P1 et un lien 112, les deux concentrateurs font alors partie d'une même zone mémoire à cohérence de cache, a titre d'exemple il est également possible de connecter deux systèmes ou calculateurs ensemble, via un lien 112 entre le port P1 d'un concentrateur du premier système et le port P1 d'un concentrateur du deuxième système. Dans ce dernier cas, les deux concentrateurs font de préférence partie de deux zones mémoires à cohérence de cache différentes, et, par exemple, une cohérence d'entrée/sortie est mise en œuvre entre les deux concentrateurs, c'est à dire entre les deux systèmes. Dit autrement, un port P1 configuré pour mettre en œuvre une cohérence de cache est, de préférence, également configuré pour permettre la mise en œuvre d'une cohérence d'entrée/sortie, bien que l'inverse ne soit pas vrai. La connexion de plusieurs systèmes entre eux permet par exemple la mise en œuvre d'un système redondant.

Enfin, la mise en oeuvre pratique des modes de réalisation et variantes décrits est à la portée de la personne du métier à partir des indications fonctionnelles données ci-dessus.

## Revendications

1. Circuit (102) concentrateur de communication comprenant :
au moins deux premiers ports physiques (P1) configurés chacun pour échanger des données avec un autre circuit concentrateur (102) de communication faisant partie d'une même zone mémoire (116) à cohérence de cache que ledit circuit concentrateur (102), lorsque ledit premier port est connecté via un lien haute vitesse (112) à cet autre circuit concentrateur de communication ;
au moins un deuxième port physique (P2) configuré pour échanger des données avec une micropuce de calcul (106) faisant partie de ladite même zone mémoire (116) à cohérence de cache lorsque ledit au moins un deuxième port physique est connecté via un lien haute vitesse (120) à cette micropuce de calcul ;
au moins un troisième port physique (P3) configuré pour échanger des données avec une micropuce accélératrice (108) faisant partie d'une zone mémoire (124) à cohérence d'entrée/sortie avec ladite même zone mémoire (116) à cohérence de cache, lorsque ledit au moins un troisième port physique est connecté via un lien haute vitesse (122) à cette micropuce accélératrice ;
au moins une première interface (ITm) configurée pour échanger des données avec un circuit mémoire (110) faisant partie de ladite même zone mémoire (116) à cohérence de cache lorsque ladite au moins une première interface est connectée à ce circuit mémoire ;
au moins une deuxième interface (ITs, ITe) configurée pour échanger des données avec un capteur (104) ;
au moins un circuit de traitement (PUs) configuré pour mettre en œuvre des traitements de données ;
au moins un réseau sur puce (NOC) configuré pour transférer des données entre des éléments du circuit concentrateur de communication (102), lesdits éléments comprenant lesdits au moins deux premiers ports (P1), ledit au moins un deuxième port (P2), ledit au moins un troisième port (P3), ledit au moins un circuit de traitement (PUs) et ladite au moins une première interface (ITm).

2. Circuit concentrateur selon la revendication 1, dans lequel :
lesdits au moins deux premiers ports physiques (P1) sont configurés chacun pour mettre en œuvre un protocole CXL.mem et CXL.cache ou AXI stream lors d'un échange des données avec l'autre circuit concentrateur de communication (102) ;
ledit au moins un deuxième port physique (P2) est configuré pour mettre en œuvre un protocole CXL.cache et CXL.mem lors d'un échange de données avec la micropuce de calcul (106) ; et
ledit au moins un troisième port physique (P3) est configuré pour mettre en œuvre un protocole CXL.mem, CXL.io ou PCIe lors d'un échange des données avec la micropuce accélératrice (108).

3. Circuit concentrateur selon la revendication 1 ou 2, dans lequel le circuit concentrateur (102) est configuré pour fusionner plusieurs flux de données qu'il reçoit sans mettre en œuvre de traitement sur lesdits plusieurs flux.

4. Circuit concentrateur selon l'une quelconque des revendications 1 à 3, dans lequel le circuit concentrateur (102) est configuré pour mettre en œuvre des traitements sur des flux de données séparés qu'il reçoit puis pour fusionner des résultats de ces traitements.

5. Circuit concentrateur selon l'une quelconque des revendications 1 à 4, dans lequel le circuit concentrateur (102) est configuré pour mettre en œuvre une cohérence de cache dans ladite même zone mémoire (116) à cohérence de cache.

6. Circuit concentrateur selon l'une quelconque des revendications 1 à 5, dans lequel le circuit concentrateur (102) est configuré pour mettre en œuvre une cohérence d'entrée/sortie entre ladite même zone mémoire (116) à cohérence de cache et une autre zone mémoire (124) à laquelle appartient une micropuce accélératrice (108).

7. Circuit concentrateur selon l'une quelconque des revendications 1 à 6, dans lequel ladite au moins une première interface (ITm) comprend une interface pour une mémoire de type DDR et/ou une interface pour une mémoire de type FLASH.

8. Circuit concentrateur selon l'une quelconque des revendications 1 à 7, dans lequel le circuit concentrateur (102) comprend en outre un circuit d'accès direct en mémoire (DMA).

9. Circuit concentrateur selon l'une quelconque des revendications 1 à 8, dans lequel ladite au moins une deuxième interface comprend au moins une interface de type CSI et/ou au moins une interface de type Ethernet.

10. Circuit concentrateur selon l'une quelconque des revendications 1 à 9, dans lequel le circuit concentrateur (102) comprend en outre au moins une troisième interface (ITd) configurée pour échanger des données avec un écran.

11. Système (500) comprenant :
exactement un circuit concentrateur (102) selon l'une quelconque des revendications 1 à 10 ; et
une mémoire (110) connectée à ladite au moins une première interface (ITm), aucune micropuce de calcul (106) et micropuce accélératrice (108) n'étant connectée au circuit concentrateur.

12. Système (600) comprenant :
exactement un circuit concentrateur (102) selon l'une quelconque des revendications 1 à 10 ; et
une micropuce de calcul (106) connectée audit au moins un deuxième port (P2) du circuit concentrateur par un lien haute vitesse (120), aucune autre micropuce de calcul (106) et aucune micropuce accélératrice (108) n'étant connectée au circuit concentrateur.

13. Système (800) comprenant :
exactement un premier circuit concentrateur (102) selon l'une quelconque des revendications 1 à 10 et un deuxième circuit concentrateur (102) selon l'une quelconque des revendications 1 à 10, un des premiers ports (P1) du premier circuit concentrateur étant connecté à l'un des premiers ports (P1) du deuxième circuit concentrateur par un premier lien haute vitesse (112) ;
une première micropuce de calcul (106) connectée audit au moins un deuxième port (P2) du premier circuit concentrateur par un deuxième lien haute vitesse (120), aucune autre micropuce de calcul (106) et aucune micropuce accélératrice (108) n'étant connectée au premier circuit concentrateur ; et
une deuxième micropuce de calcul (106) connectée audit au moins un deuxième port (P2) du deuxième circuit concentrateur par un troisième lien haute vitesse (120), aucune autre micropuce de calcul (106) et aucune micropuce accélératrice (108) n'étant connectée au deuxième circuit concentrateur.

14. Système (700) comprenant :
exactement un premier circuit concentrateur (102) selon l'une quelconque des revendications 1 à 10 et un deuxième circuit concentrateur (102) selon l'une quelconque des revendications 1 à 10, un des premiers ports (P1) du premier circuit concentrateur étant connecté à l'un des premiers ports (P1) du deuxième circuit concentrateur par un premier lien haute vitesse (112) ;
une première micropuce de calcul (106) connectée audit au moins un deuxième port (P2) du premier circuit concentrateur (120) par un deuxième lien haute vitesse (120), aucune autre micropuce de calcul (106) et aucune micropuce accélératrice (108) n'étant connectée au premier circuit concentrateur ; et
une première micropuce accélératrice (108) connectée audit au moins un troisième port (P3) du deuxième circuit concentrateur (102) par un troisième lien haute vitesse (122), aucune autre micropuce accélératrice (108) et aucune micropuce de calcul (106) n'étant connectée au deuxième circuit concentrateur.

15. Système (900) comprenant :
exactement un premier circuit concentrateur (102) selon l'une quelconque des revendications 1 à 10, un deuxième circuit concentrateur (102) selon l'une quelconque des revendications 1 à 10, un troisième circuit concentrateur (102) selon l'une quelconque des revendications 1 à 10, un quatrième circuit concentrateur (102) selon l'une quelconque des revendications 1 à 10, un des premiers ports (P1) du premier circuit étant connecté à l'un des premiers ports (P1) du deuxième circuit par un premier lien haute vitesse (112), un autre des premiers ports (P1) du deuxième circuit étant connecté à l'un des premiers ports (P1) du troisième circuit par un deuxième lien haute vitesse (112), un autre des premiers ports (P1) du troisième circuit étant connecté à l'un des premiers ports (P1) du quatrième circuit par un troisième lien haute vitesse (112), un autre des premiers ports (P1) du quatrième circuit étant connecté à un autre des premiers ports (P1) du premier circuit par un quatrième lien haute vitesse (112) ;
une première micropuce de calcul (106) connectée audit au moins un deuxième port (P2) du premier circuit concentrateur par un cinquième lien haute vitesse (120), aucune autre micropuce de calcul (106) et aucune micropuce accélératrice (108) n'étant connectée au premier circuit concentrateur ;
une deuxième micropuce de calcul (106) connectée audit au moins un deuxième port (P2) du deuxième circuit concentrateur par un sixième lien haute vitesse (120), aucune autre micropuce de calcul (106) et aucune micropuce accélératrice (108) n'étant connectée au deuxième circuit concentrateur ;
une première micropuce accélératrice (108) connectée audit au moins un troisième port (P3) du troisième circuit concentrateur par un septième lien haute vitesse (122), aucune autre micropuce accélératrice (108) et aucune micropuce de calcul (106) n'étant connectée au troisième circuit concentrateur ;
une deuxième micropuce accélératrice (108) connectée audit au moins un troisième port (P3) du quatrième circuit concentrateur par un huitième lien haute vitesse (122), aucune autre micropuce accélératrice (108) et aucune micropuce de calcul (106) n'étant connectée au quatrième circuit concentrateur.

16. Système selon la revendication 14 ou 15, dans lequel chaque micropuce accélératrice (108) est configurée pour mettre en œuvre des traitements de données pour des systèmes avancés d'assistance au pilote de niveau L2+, L3 ou L4.

## Patentansprüche

1. Eine Kommunikations-Hub-Schaltung (102), aufweisend:
mindestens zwei erste physikalische Ports (P1), die jeweils so konfiguriert sind, dass sie Daten mit einer anderen Kommunikations-Hub-Schaltung (102) austauschen, die Teil desselben cache-kohärenten Speicherbereichs (116) wie die Hub-Schaltung (102) ist, wenn der erste Port über eine Hochgeschwindigkeitsverbindung (112) mit dieser anderen Kommunikations-Hub-Schaltung verbunden ist;
mindestens einen zweiten physikalischen Port (P2), der so konfiguriert ist, dass er Daten mit einem Rechen-Mikrochip (106) austauscht, der Teil desselben cache-kohärenten Speicherbereichs (116) ist, wenn der mindestens eine zweite physikalische Port über eine Hochgeschwindigkeitsverbindung (120) mit diesem Rechen-Mikrochip verbunden ist;
mindestens einen dritten physikalischen Port (P3), der so konfiguriert ist, dass er Daten mit einem Beschleunigungs-Mikrochip (108), der Teil eines Eingabe-/Ausgabe-kohärenten Speicherbereichs (124) ist, mit demselben cache-kohärenten Speicherbereich (116) austauscht, wenn der mindestens eine dritte physikalische Port über eine Hochgeschwindigkeitsverbindung (122) mit diesem Beschleunigungs-Mikrochip verbunden ist;
mindestens eine erste Schnittstelle (ITm), die so konfiguriert ist, dass sie Daten mit einer Speicherschaltung (110) austauscht, die Teil desselben cache-kohärenten Speicherbereichs (116) ist, wenn die mindestens eine erste Schnittstelle mit dieser Speicherschaltung verbunden ist;
mindestens eine zweite Schnittstelle (ITs, ITe), die so konfiguriert ist, dass sie Daten mit einem Sensor (104) austauscht;
mindestens eine Verarbeitungsschaltung (PUs), die zum Ausführen einer Datenverarbeitung konfiguriert ist;
mindestens ein Netzwerk-on-Chip (NOC), das so konfiguriert ist, dass es Daten zwischen Elementen der Kommunikations-Hub-Schaltung (102) überträgt, wobei die Elemente die mindestens zwei ersten Ports (P1), den mindestens einen zweiten Port (P2), den mindestens einen dritten Port (P3), die mindestens eine Verarbeitungsschaltung (PUs) und die mindestens eine erste Schnittstelle (ITm) aufweisen.

2. Die Hub-Schaltung gemäß Anspruch 1, wobei:
die mindestens zwei ersten physikalischen Ports (P1) jeweils so konfiguriert sind, dass sie ein CXL.mem- und CXL.cache- oder AXI-Stream-Protokoll implementieren, wenn sie Daten mit der anderen Kommunikations-Hub-Schaltung (102) austauschen;
der mindestens eine zweite physikalische Port (P2) so konfiguriert ist, dass er ein CXL.cache- und CXL.mem-Protokoll implementiert, wenn er Daten mit dem Rechen-Mikrochip (106) austauscht; und
der mindestens eine dritte physikalische Port (P3) so konfiguriert ist, dass er ein CXL.mem, CXL.io oder PCle-Protokoll implementiert, wenn er Daten mit dem Beschleunigungs-Mikrochip (108) austauscht.

3. Die Hub-Schaltung gemäß Anspruch 1 oder 2, wobei die Hub-Schaltung (102) so konfiguriert ist, dass sie mehrere empfangene Datenströme zusammenführt, ohne eine Verarbeitung dieser mehreren Ströme durchzuführen.

4. Die Hub-Schaltung gemäß einem der Ansprüche 1 bis 3, wobei die Hub-Schaltung (102) so konfiguriert ist, dass sie eine Verarbeitung separater empfangener Datenströme durchführt und anschließend die Ergebnisse dieser Verarbeitung zusammenführt.

5. Die Hub-Schaltung gemäß einem der Ansprüche 1 bis 4, wobei die Hub-Schaltung (102) so konfiguriert ist, dass sie Cache-Kohärenz in demselben cache-kohärenten Speicherbereich (116) implementiert.

6. Die Hub-Schaltung gemäß einem der Ansprüche 1 bis 5, wobei die Hub-Schaltung (102) so konfiguriert ist, dass sie eine Eingabe-/Ausgabe-Kohärenz zwischen demselben cache-kohärenten Speicherbereich (116) und einem anderen Speicherbereich (124), zu dem ein Beschleunigungs-Mikrochip (108) gehört, implementiert.

7. Die Hub-Schaltung nach einem der Ansprüche 1 bis 6, wobei die mindestens eine erste Schnittstelle (ITm) eine Schnittstelle für einen Speicher vom Typ DDR und/oder eine Schnittstelle für einen Speicher vom Typ FLASH aufweist.

8. Die Hub-Schaltung nach einem der Ansprüche 1 bis 7, wobei die Hub-Schaltung (102) ferner eine Direktspeicherzugriffsschaltung (DMA) aufweist.

9. Die Hub-Schaltung nach einem der Ansprüche 1 bis 8, wobei die mindestens eine zweite Schnittstelle mindestens eine Schnittstelle vom Typ CSI und/oder mindestens eine Schnittstelle vom Typ Ethernet aufweist.

10. Die Hub-Schaltung nach einem der Ansprüche 1 bis 9, wobei die Hub-Schaltung (102) ferner mindestens eine dritte Schnittstelle (ITd) aufweist, die zum Austausch von Daten mit einer Anzeige konfiguriert ist.

11. Ein System (500), das Folgendes aufweist:
genau eine Hub-Schaltung (102) gemäß einem der Ansprüche 1 bis 10; und
einen Speicher (110), der mit der mindestens einer ersten Schnittstelle (ITm) verbunden ist, wobei kein Rechen-Mikrochip (106) und kein Beschleunigungs-Mikrochip (108) mit der Hub-Schaltung verbunden sind.

12. Ein System (600), das Folgendes aufweist:
genau eine Hub-Schaltung (102) gemäß einem der Ansprüche 1 bis 10; und
einen Rechen-Mikrochip (106), der über eine Hochgeschwindigkeitsverbindung (120) mit dem mindestens einen zweiten Port (P2) der Hub-Schaltung verbunden ist, wobei kein weiterer Rechen-Mikrochip (106) und kein Beschleuniger-Mikrochip (108) mit der Hub-Schaltung verbunden ist.

13. Ein System (800), das Folgendes aufweist:
genau eine erste Hub-Schaltung (102) gemäß einem der Ansprüche 1 bis 10 und eine zweite Hub-Schaltung (102) gemäß einem der Ansprüche 1 bis 10, wobei einer der ersten Ports (P1) der ersten Hub-Schaltung über eine erste Hochgeschwindigkeitsverbindung (112) mit einem der ersten Ports (P1) der zweiten Hub-Schaltung verbunden ist;
einen ersten Rechen-Mikrochip (106), der über eine zweite Hochgeschwindigkeitsverbindung (120) mit dem mindestens einen zweiten Port (P2) der ersten Hub-Schaltung verbunden ist, wobei kein weiterer Rechen-Mikrochip (106) und kein Beschleunigungs-Mikrochip (108) mit der ersten Hub-Schaltung verbunden ist; und
einem zweiten Rechen-Mikrochip (106), der über eine dritte Hochgeschwindigkeitsverbindung (120) mit dem mindestens einen zweiten Port (P2) der zweiten Hub-Schaltung verbunden ist, wobei kein weiterer Rechen-Mikrochip (106) und kein Beschleunigungs-Mikrochip (108) mit der zweiten Hub-Schaltung verbunden ist.

14. Ein System (700), das Folgendes aufweist:
genau eine erste Hub-Schaltung (102) gemäß einem der Ansprüche 1 bis 10 und eine zweite Hub-Schaltung (102) gemäß einem der Ansprüche 1 bis 10, wobei einer der ersten Ports (P1) der ersten Hub-Schaltung über eine erste Hochgeschwindigkeitsverbindung (112) mit einem der ersten Ports (P1) der zweiten Hub-Schaltung verbunden ist;
einen ersten Rechen-Mikrochip (106), der mit dem mindestens einen zweiten Port (P2) der ersten Hub-Schaltung (120) über eine zweite Hochgeschwindigkeitsverbindung (120) verbunden ist, wobei kein weiterer Rechen-Mikrochip (106) und kein Beschleunigungs-Mikrochip (108) mit der ersten Hub-Schaltung verbunden ist; und
einen ersten Beschleunigungs-Mikrochip (108), der mit dem mindestens einen dritten Port (P3) der zweiten Hub-Schaltung (102) über eine dritte Hochgeschwindigkeitsverbindung (122) verbunden ist, wobei kein anderer Beschleunigungs-Mikrochip (108) und kein Rechen-Mikrochip (106) mit der zweiten Hub-Schaltung verbunden ist.

15. Ein System (900), das Folgendes aufweist:
genau eine erste Hub-Schaltung (102) gemäß einem der Ansprüche 1 bis 10, eine zweite Hub-Schaltung (102) gemäß einem der Ansprüche 1 bis 10, eine dritte Hub-Schaltung (102) gemäß einem der Ansprüche 1 bis 10, eine vierte Hub-Schaltung (102) gemäß einem der Ansprüche 1 bis 10, wobei einer der ersten Ports (P1) der ersten Schaltung über eine erste Hochgeschwindigkeitsverbindung (112) mit einem der ersten Ports (P1) der zweiten Schaltung verbunden ist, ein weiterer der ersten Ports (P1) der zweiten Schaltung über eine zweite Hochgeschwindigkeitsverbindung (112) mit einem der ersten Ports (P1) der dritten Schaltung verbunden ist, ein weiterer der ersten Anschlüsse (P1) der dritten Schaltung mit einem der ersten Anschlüsse (P1) der vierten Schaltung über eine dritte Hochgeschwindigkeitsverbindung (112) verbunden ist, ein weiterer der ersten Anschlüsse (P1) der vierten Schaltung mit einem weiteren der ersten Anschlüsse (P1) der ersten Schaltung über eine vierte Hochgeschwindigkeitsverbindung (112) verbunden ist;
ein erster Rechen-Mikrochip (106), der mit dem mindestens einen zweiten Port (P2) der ersten Hub-Schaltung über eine fünfte Hochgeschwindigkeitsverbindung (120) verbunden ist, wobei kein weiterer Rechen-Mikrochip (106) und kein Beschleunigungsmikrochip (108) mit der ersten Hub-Schaltung verbunden ist;
ein zweiter Rechen-Mikrochip (106), der über eine sechste Hochgeschwindigkeitsverbindung (120) mit dem mindestens einen zweiten Port (P2) der zweiten Hub-Schaltung verbunden ist, wobei kein anderer Rechen-Mikrochip (106) und kein Beschleunigungs-Mikrochip (108) mit der zweiten Hub-Schaltung verbunden ist;
ein erster Beschleunigungs-Mikrochip (108), der über eine siebte Hochgeschwindigkeitsverbindung (122) mit dem mindestens einen dritten Port (P3) der dritten Hub-Schaltung verbunden ist, wobei kein weiterer Beschleunigungs-Mikrochip (108) und kein Rechen-Mikrochip (106) mit der dritten Hub-Schaltung verbunden ist;
ein zweiter Beschleunigungs-Mikrochip (108), der über eine achte Hochgeschwindigkeitsverbindung (122) mit dem mindestens einen dritten Port (P3) der vierten Hub-Schaltung verbunden ist, wobei kein anderer Beschleunigungs-Mikrochip (108) und kein Rechen-Mikrochip (106) mit der vierten Hub-Schaltung verbunden ist.

16. Das System gemäß Anspruch 14 oder 15, wobei jeder Beschleunigungs-Mikrochip (108) so konfiguriert ist, dass er die Datenverarbeitung für fortschrittliche Fahrerassistenzsysteme der Stufen L2+, L3 oder L4 implementiert.

## Claims

1. A communication hub circuit (102) comprising:
at least two first physical ports (P1) each configured to exchange data with another communication hub circuit (102) forming part of the same cache-coherent memory area (116) as said hub circuit (102), when said first port is connected via a high-speed link (112) to this other communication hub circuit;
at least one second physical port (P2) configured to exchange data with a computing microchip (106) forming part of said same cache-coherent memory area (116) when said at least one second physical port is connected via a high-speed link (120) to this computing microchip;
at least one third physical port (P3) configured to exchange data with an accelerator microchip (108) forming part of an input/output coherent memory area (124) with said same cache coherent memory area (116), when said at least one third physical port is connected via a high-speed link (122) to this accelerator microchip;
at least one first interface (ITm) configured to exchange data with a memory circuit (110) forming part of said same cache-coherent memory area (116) when said at least one first interface is connected to this memory circuit;
at least one second interface (ITs, ITe) configured to exchange data with a sensor (104);
at least one processing circuit (PUs) configured to implement data processing;
at least one network-on-chip (NOC) configured to transfer data between elements of the communication hub circuit (102), said elements comprising said at least two first ports (P1), said at least one second port (P2), said at least one third port (P3), said at least one processing circuit (PUs) and said at least one first interface (ITm).

2. The hub circuit according to claim 1, wherein:
said at least two first physical ports (P1) are each configured to implement a CXL.mem and CXL.cache or AXI stream protocol when exchanging data with the other communication hub circuit (102);
said at least one second physical port (P2) is configured to implement a CXL.cache and CXL.mem protocol when exchanging data with the computing microchip (106); and
said at least one third physical port (P3) is configured to implement a CXL.mem, CXL.io or PCIe protocol when exchanging data with the accelerator microchip (108).

3. The hub circuit according to claim 1 or 2, wherein the hub circuit (102) is configured to merge several data flows it receives without implementing any processing on said several flows.

4. The hub circuit according to any one of claims 1 to 3, wherein the hub circuit (102) is configured to implement processing on separate data flows it receives and then to merge the results of these processing.

5. The hub circuit according to any one of claims 1 to 4, wherein the hub circuit (102) is configured to implement cache coherency in said same cache-coherent memory area (116).

6. The hub circuit according to any one of claims 1 to 5, wherein the hub circuit (102) is configured to implement input/output coherency between the same cache-coherent memory area (116) and another memory area (124) to which an accelerator microchip (108) belongs.

7. The hub circuit according to any one of claims 1 to 6, wherein said at least one first interface (ITm) comprises an interface for a DDR-type memory and/or an interface for a FLASH-type memory.

8. The hub circuit according to any one of claims 1 to 7, wherein the hub circuit (102) further comprises a direct memory access (DMA) circuit.

9. The hub circuit according to any one of claims 1 to 8, wherein said at least one second interface comprises at least one CSI-type interface and/or at least one Ethernet-type interface.

10. The hub circuit according to any one of claims 1 to 9, wherein the hub circuit (102) further comprises at least one third interface (ITd) configured to exchange data with a display.

11. A system (500) comprising:
exactly one hub circuit (102) according to any one of claims 1 to 10; and
a memory (110) connected to said at least one first interface (ITm), no computing microchip (106) and accelerator microchip (108) being connected to the hub circuit.

12. A system (600) comprising:
exactly one hub circuit (102) according to any one of claims 1 to 10; and
a computing microchip (106) connected to said at least one second port (P2) of the hub circuit by a high-speed link (120), no other computing microchip (106) and no accelerator microchip (108) being connected to the hub circuit.

13. A system (800) comprising:
exactly one first hub circuit (102) according to any one of claims 1 to 10 and one second hub circuit (102) according to any one of claims 1 to 10, one of the first ports (P1) of the first hub circuit being connected to one of the first ports (P1) of the second hub circuit by a first high-speed link (112);
a first computing microchip (106) connected to said at least one second port (P2) of the first hub circuit by a second high-speed link (120), no other computing microchip (106) and no accelerator microchip (108) being connected to the first hub circuit; and
a second computing microchip (106) connected to said at least one second port (P2) of the second hub circuit by a third high-speed link (120), no other computing microchip (106) and no accelerator microchip (108) being connected to the second hub circuit.

14. A system (700) comprising:
exactly one first hub circuit (102) according to any one of claims 1 to 10 and one second hub circuit (102) according to any one of claims 1 to 10, one of the first ports (P1) of the first hub circuit being connected to one of the first ports (P1) of the second hub circuit by a first high-speed link (112);
a first computing microchip (106) connected to said at least one second port (P2) of the first hub circuit (120) by a second high-speed link (120), no other computing microchip (106) and no accelerator microchip (108) being connected to the first hub circuit; and
a first accelerator microchip (108) connected to said at least one third port (P3) of the second hub circuit (102) by a third high-speed link (122), no other accelerator microchip (108) and no computing microchip (106) being connected to the second hub circuit.

15. A system (900) comprising:
exactly one first hub circuit (102) according to any one of claims 1 to 10, a second hub circuit (102) according to any one of claims 1 to 10, a third hub circuit (102) according to any one of claims 1 to 10, a fourth hub circuit (102) according to any one of claims 1 to 10, one of the first ports (P1) of the first circuit being connected to one of the first ports (P1) of the second circuit by a first high-speed link (112), another of the first ports (P1) of the second circuit being connected to one of the first ports (P1) of the third circuit by a second high-speed link (112), another of the first ports (P1) of the third circuit being connected to one of the first ports (P1) of the fourth circuit by a third high-speed link (112), another of the first ports (P1) of the fourth circuit being connected to another of the first ports (P1) of the first circuit by a fourth high-speed link (112);
a first computing microchip (106) connected to said at least one second port (P2) of the first hub circuit by a fifth high-speed link (120), no other computing microchip (106) and no accelerator microchip (108) being connected to the first hub circuit;
a second computing microchip (106) connected to said at least one second port (P2) of the second hub circuit by a sixth high-speed link (120), no other computing microchip (106) and no accelerator microchip (108) being connected to the second hub circuit;
a first accelerator microchip (108) connected to said at least one third port (P3) of the third hub circuit by a seventh high-speed link (122), no other accelerator microchip (108) and no computing microchip (106) being connected to the third hub circuit;
a second accelerator microchip (108) connected to said at least one third port (P3) of the fourth hub circuit by an eighth high-speed link (122), no other accelerator microchip (108) and no computing microchip (106) being connected to the fourth hub circuit.

16. The system according to claim 14 or 15, wherein each accelerator microchip (108) is configured to implement data processing for advanced pilot assistance systems of level L2+, L3, or L4.
